# EUROPEAN PATENT SPECIFICATION

(11) **EP 3 346 241 B1**
(45) Date of publication and mention of the grant of the patent: **25.11.2020**
(21) Application number: 17208602.7
(22) Date of filing: 19.12.2017
(51) Int. Cl.: G01G 7/04, G01G 23/00, G01L 1/26

(54) **ELECTRONIC BALANCE**
ELEKTRONISCHE WAAGE
BALANCE ÉLECTRONIQUE

(30) Priority: 28.12.2016 JP 2016255085
(43) Date of publication of application: 11.07.2018
(73) Proprietor: Shimadzu Corporation, Kyoto 604-8511 (JP)
(72) Inventor: KUSUMOTO, Tetsuro, Kyoto-shi, Kyoto 6048511 (JP); KAWAI, Masayuki, Tokyo, Tokyo 1070052 (JP); IIZUKA, Atsushi, Kyoto-shi, Kyoto 6048511 (JP)
(74) Representative: Mewburn Ellis LLP

(56) References cited:
- JP-A- 2002 107 216
- JP-A- 2015 169 536
- US-A1- 2005 044 970

## Description

### TECHNICAL FIELD

The present invention relates to an electronic balance which weighs an object to be measured placed on a weighing pan according to claim 1.

### BACKGROUND

A so-called electromagnetic force balancing type electronic balance includes an electromagnetic force generating device having, for example, a movable coil and a magnetic circuit. The magnetic circuit has a configuration including a permanent magnet, a yoke, and the like, and can form a static magnetic field inside. The movable coil is disposed in the static magnetic field formed by the magnetic circuit, and can be displaced along an axial direction of the movable coil.

A weighing pan on which an object to be measured is placed is connected to the movable coil via a lever, and the movable coil connected to the lever is displaced in conjunction with displacement of the lever due to a load of the object to be measured. At that time, displacement of the lever is detected by a detector, and a current fed to the movable coil is feedback-controlled in order to prevent displacement of the lever. Thus, mass of the object to be measured can be measured from the current value.

An electronic balance of this type includes, for example, a Roberval mechanism which restricts displacement of the weighing pan in a vertical direction. The Roberval mechanism is a mechanism for connecting a movable column to which a weighing pan is attached and a fixed column fixed to a base member of an electronic balance main body. The Roberval mechanism is configured to bend in conjunction with displacement of the movable column due to the load of the object to be measured. The lever is connected to the movable column, and the lever is also displaced in conjunction with displacement of the movable column (For example, see JP 4035724 B1.).

Document JP 2015-169536 A discloses a very similar electronic balance.

### SUMMARY OF THE INVENTION

The lever rocks about an elastic fulcrum in conjunction with displacement of the movable column in the vertical direction. The elastic fulcrum is constituted of a fulcrum spring made of a very thin leaf spring having a thickness of 0.1 mm or less, for example. Therefore, in a case where a force is applied to the lever in a direction other than a rocking direction, the elastic fulcrum may be deformed.

The present invention has been made in view of the above circumstances, and an object of the present invention is to provide an electronic balance that can effectively prevent deformation of an elastic fulcrum.

(1) An electronic balance according to the present invention includes a frame, a fixed column, a weighing pan, a movable column, a Roberval mechanism, a lever, a lever extension member, a movable coil, a magnetic circuit, and a first stopper. The fixed column is fixed to the frame. An object to be measured is placed on the weighing pan. The weighing pan is attached to the movable column. The movable column can be displaced together with the weighing pan. The Roberval mechanism interconnects the fixed column and the movable column, and restricts movement of the movable column such that the movable column is displaced in a vertical direction. The lever rocks about an elastic fulcrum in conjunction with displacement of the movable column in the vertical direction. One end portion of the lever extension member is fixed to the lever. The movable coil is fixed to the other end portion of the lever extension member, and is displaced in conjunction with rocking of the lever. The magnetic circuit applies a magnetic force to the movable coil. The first stopper restricts displacement of the lever in the horizontal direction.

According to such a configuration, the first stopper restricts horizontal displacement of the lever rocking about the elastic fulcrum. As described, since the first stopper can directly restrict displacement of the lever in the horizontal direction, which is different from a rocking direction, deformation of the elastic fulcrum can be effectively prevented.

(2) According to the invention, the electronic balance further includes a second stopper which restricts displacement of the lever extension member in the horizontal direction.

In this way, not only horizontal displacement of the lever can be restricted but also horizontal displacement of the lever extension member having one end portion fixed to the lever can be restricted by the second stopper. In a case where the second stopper restricts horizontal displacement of the lever extension member, displacement of a portion of the lever extension member having a greater displacement amount, the portion being closer to the movable coil, can be restricted; however, a moment may act on the lever extension member with the second stopper as a fulcrum, and may deform the elastic fulcrum via the lever. Even in such a case, according to the present invention, since the first stopper restricts displacement of the lever, deformation of the elastic fulcrum can be more effectively prevented.

(3) The first stopper may restrict displacement of the lever in the horizontal direction at a contact portion of the first stopper located at a height near a center of gravity of the lever.

According to such a configuration, the first stopper can restrict displacement of the lever in the horizontal direction at the height close to the center of gravity of the lever. Therefore, since it possible to prevent a moment in the vertical direction from acting on the lever whose displacement is restricted by the first stopper, the moment acting with the first stopper as a fulcrum, deformation of the elastic fulcrum can be more effectively prevented.

(4) The first stopper may be fixed to the fixed column.

According to such a configuration, since the first stopper fixed to the fixed column restricts displacement of the lever in the horizontal direction, relative displacement of the lever with respect to the fixed column can be restricted. Since the fixed column is a member fixed to the frame and a backlash of the fixed column is small, it is possible to effectively restrict displacement of the lever in the horizontal direction by fixing the first stopper to the fixed column.

(5) An opening into which the first stopper is inserted may be formed in the Roberval mechanism.

According to such a configuration, by inserting the first stopper into the opening formed in the Roberval mechanism, the first stopper can be disposed between the Roberval mechanism and the fixed column. Therefore, it is possible to fix the first stopper to the fixed column while maintaining a function of the Roberval mechanism.

(6) The first stopper may be formed with a grip which is gripped when the first stopper is inserted into the opening and is fixed to the fixed column.

According to such a configuration, since it is possible to insert the first stopper into the opening and fix the first stopper to the fixed column while gripping the grip, attachment work of the first stopper is facilitated.

According to the present invention, since the first stopper can directly restrict displacement of the lever in the horizontal direction, which is different from the rocking direction, deformation of the elastic fulcrum can be effectively prevented.

### BRIEF DESCRIPTION OF THE DRAWINGS

Fig. 1 is a perspective view illustrating a configuration example of an electronic balance according to one embodiment of the present invention.
Fig. 2 is a plan view of the electronic balance illustrated in Fig. 1.
Fig. 3 is a side view of the electronic balance illustrated in Fig. 1.
Fig. 4 is a front view of the electronic balance illustrated in Fig. 1.
Fig. 5 is a cross-sectional view of the electronic balance taken along line A-A in Fig. 2.

### DETAILED DESCRIPTION OF THE PREFERRED EMBODIMENTS

### 1. Configuration of Electronic Balance

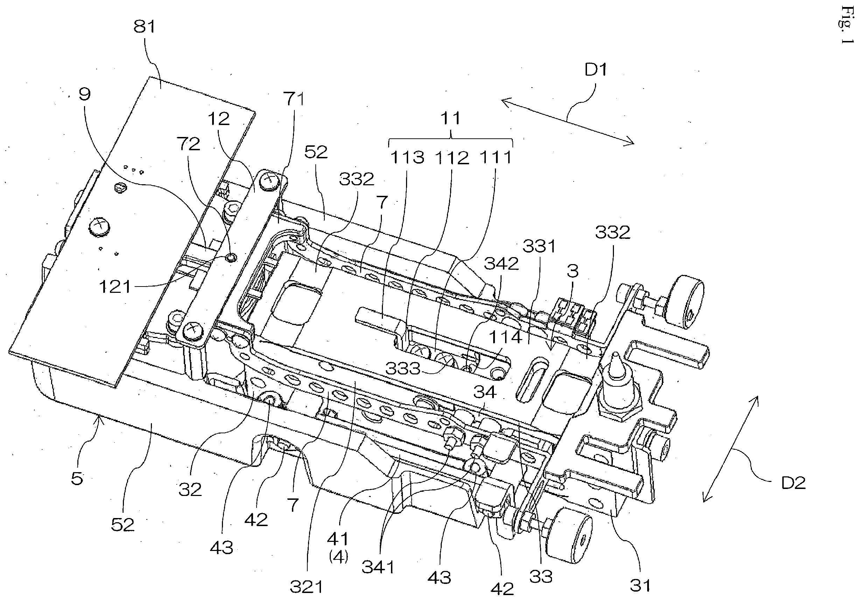

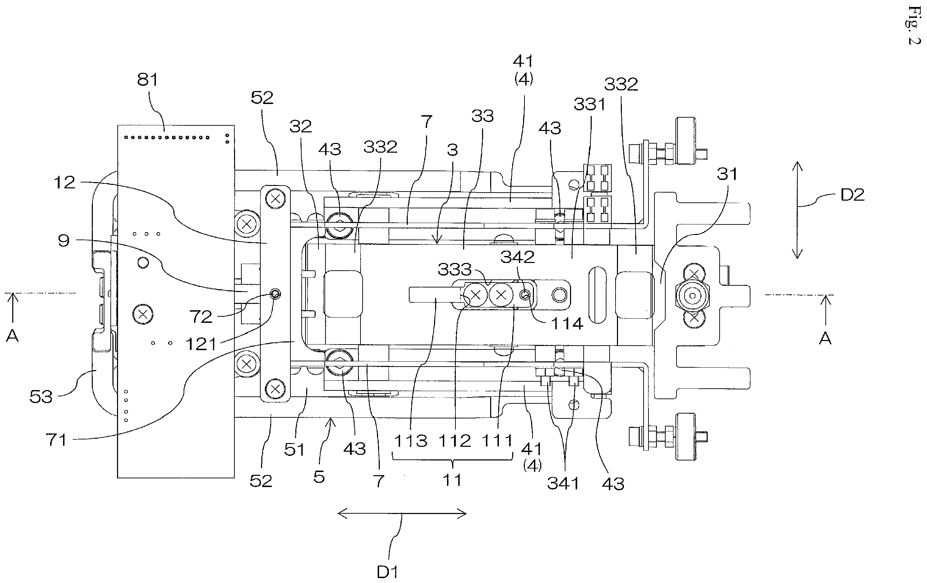

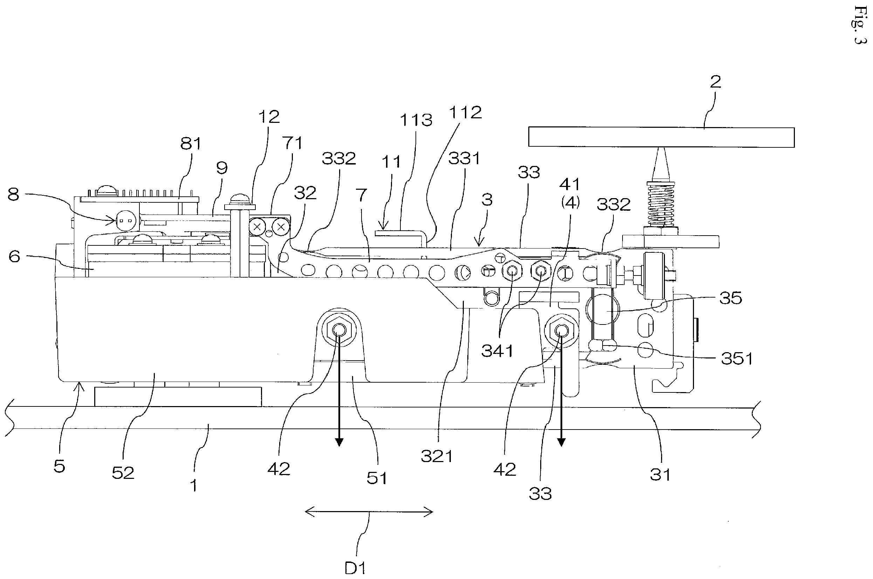

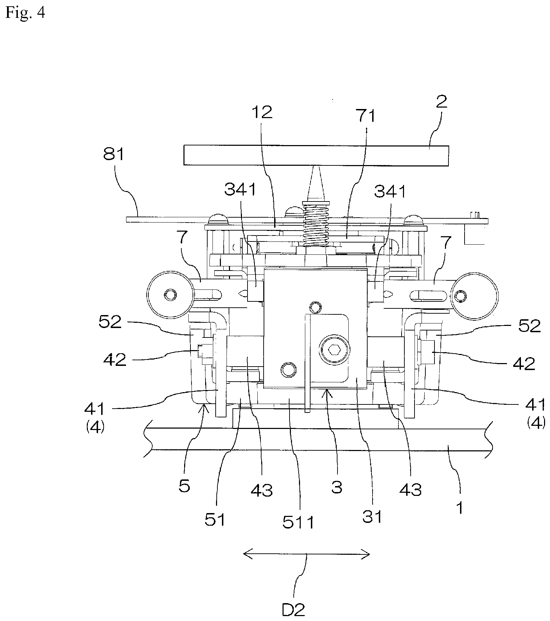

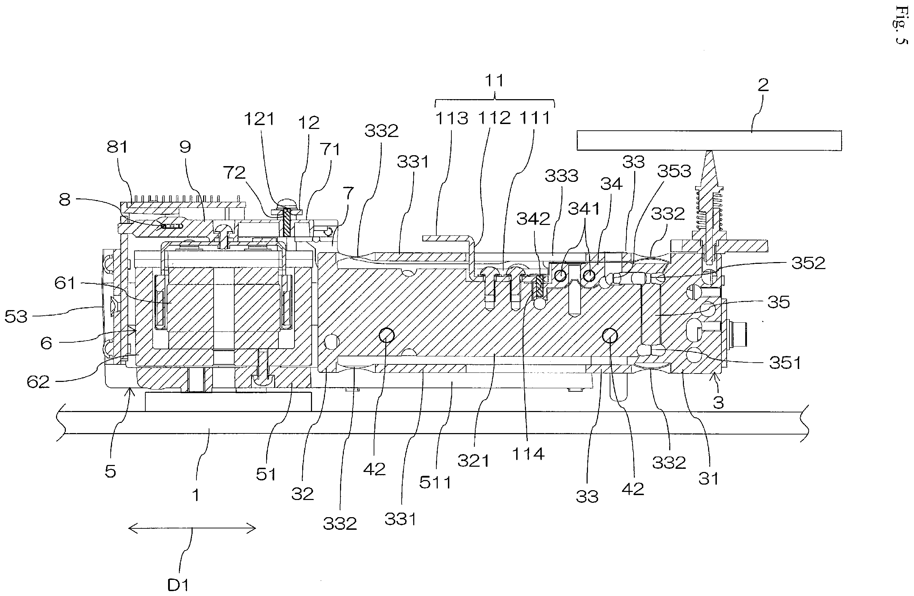

Fig. 1 is a perspective view illustrating a configuration example of an electronic balance according to one embodiment of the present invention. Fig. 2 is a plan view of the electronic balance illustrated in Fig. 1. Fig. 3 is a side view of the electronic balance illustrated in Fig. 1. Fig. 4 is a front view of the electronic balance illustrated in Fig. 1. Fig. 5 is a cross-sectional view of the electronic balance taken along line A-A in Fig. 2.

In this electronic balance, each member is provided on a base member 1, and an object to be measured can be placed on a weighing pan 2 and measured. Note that in Figs. 1 and 2, the base member 1 and the weighing pan 2 of the electronic balance are not illustrated. Further, in Figs. 3 to 5, part of the base member 1 is not illustrated. The electronic balance according to the present embodiment includes, in addition to the base member 1 and the weighing pan 2, a block-shaped mechanism body 3, a first frame 4, a second frame 5, an electromagnetic force generating device 6, a lever extension member 7, a detector 8, a shutter 9, and the like.

The weighing pan 2 is attached to the block-shaped mechanism body 3. The block-shaped mechanism body 3 is formed by hollowing out one base material of a quadrangular prism shape made of, for example, an aluminum alloy. Therefore, the block-shaped mechanism body 3 is configured such that a movable column 31, a fixed column 32, Roberval mechanisms 33, a lever 34, a connecting portion 35, and the like are integrally formed. However, the block-shaped mechanism body 3 is not limited to a quadrangular prism-shaped member made of an aluminum alloy, and may be formed of another material or may have another shape.

The movable column 31 is, for example, a quadrangular prism-shaped portion extending in a vertical direction, and the weighing pan 2 is attached to an upper surface of the movable column 31. The movable column 31 constitutes one end portion of the block-shaped mechanism body 3 in a horizontal direction. In contrast, the fixed column 32 constitutes the other end portion of the block-shaped mechanism body 3 in the horizontal direction. The fixed column 32 is fixed to the first frame 4, and thus the block-shaped mechanism body 3 is supported at the fixed column 32.

The Roberval mechanism 33 extends from the one end portion to the other end portion of the block-shaped mechanism body 3 along the horizontal direction, and interconnects the movable column 31 and the fixed column 32. In the present embodiment, upper end portions and lower end portions of the movable column 31 and the fixed column 32 are connected to each other by a pair of the Roberval mechanisms 33. Thus, the pair of the Roberval mechanisms 33 constitutes an upper surface and a lower surface of the block-shaped mechanism body 3.

Each Roberval mechanism 33 has a beam 331, having a flat plate shape, extending in the horizontal direction, and flexible portions 332 connecting both end portions of the beam 331 to the movable column 31 and the fixed column 32, respectively. The flexible portion 332 is formed to be thinner than the beam 331. Therefore, the flexible portion 332 is more easily elastically deformed. In a case where a load of an object to be measured is applied to the weighing pan 2, the flexible portion 332 of each Roberval mechanism 33 bends, and the movable column 31 is displaced vertically downward together with the weighing pan 2. At that time, due to action of each Roberval mechanism 33, movement of the movable column 31 is restricted such that the movable column 31 is displaced in the vertical direction.

The fixed column 32 in the present embodiment is formed with an extended portion 321, having an elongated shape, extending horizontally along the Roberval mechanism 33 toward the movable column 31. The extended portion 321 is disposed between the pair of the Roberval mechanisms 33. Since a predetermined interval is formed between the extended portion 321 and each Roberval mechanism 33, it is possible to prevent the extended portion 321 from being brought into contact with the Roberval mechanisms 33 when each Roberval mechanism 33 bends.

The lever 34 is connected to the movable column 31 via the connecting portion 35. As illustrated in Fig. 5, the connecting portion 35 extends in the vertical direction between the extended portion 321 of the fixed column 32 and the movable column 31. A lower end portion of the connecting portion 35 is connected to the movable column 31 via a point-of-force spring 351. An upper end portion of the connecting portion 35 is connected to one end portion of the lever 34 via a point-of-force spring 352. Each of the point-of-force springs 351 and 352 is a very thin leaf spring having a thickness of 0.1 mm or less, for example, and moves up and down together with the connecting portion 35 in conjunction with displacement of the movable column 31.

The lever 34 extends in the horizontal direction along the Roberval mechanism 33, and a central portion of the lever 34 is connected to the extended portion 321 of the fixed column 32 via a fulcrum spring 353. Similarly to the point-of-force springs 351 and 352, the fulcrum spring 353 is made of a very thin leaf spring having a thickness of 0.1 mm or less, for example. Therefore, in a case where the connecting portion 35 moves up and down in conjunction with displacement of the movable column 31, a force is applied in the vertical direction to the one end portion of the lever 34 via the point-of-force spring 352, and the lever 34 rocks about the fulcrum spring 353. As described, the fulcrum spring 353 constitutes an elastic fulcrum which serves as a fulcrum when the lever 34 rocks.

On the other end portion of the lever 34, that is, on a side opposite to a point-of-force spring 352 side with respect to the fulcrum spring 353, the lever extension member 7 is attached by means of a fixture 341 configured of, for example, a bolt and a nut. In this example, a pair of lever extension members 7 extending along a longitudinal direction D1 of the block-shaped mechanism body 3 are provided on both sides of the block-shaped mechanism body 3 in a width direction D2 (horizontal direction perpendicular to the longitudinal direction D1). One end portion of each lever extension member 7 in the longitudinal direction D1 is fixed to the lever 34.

The first frame 4 is constituted of a pair of separation frames 41 provided on both sides of the block-shaped mechanism body 3 in the width direction D2. Each separation frame 41 is a member having an elongated shape along the longitudinal direction D1 and made of, for example, aluminum. A cross section of the separation frame 41 perpendicular to the longitudinal direction D1 has an L shape.

Each separation frame 41 is fixed to the block-shaped mechanism body 3 by means of a plurality of fixtures 42 which each are configured of, for example, a bolt and a nut. More specifically, as illustrated in Fig. 5, each fixture 42 is fixed so as to penetrate the extended portion 321 of the block-shaped mechanism body 3 in the width direction D2.

The second frame 5 is made of, for example, aluminum. The second frame 5 is configured such that a bottom plate 51 which supports the first frame 4 from below, side plates 52 which extend upward from both end portions of the bottom plate 51 in the width direction D2, and a back plate 53 which extends upward from one end portion of the bottom plate 51 in the longitudinal direction D1 are integrally formed. Each of the separation frames 41 constituting the first frame 4 is fixed to the bottom plate 51 of the second frame 5 by means of a plurality of fixtures 43 which each are configured of, for example, a bolt and a nut.

As illustrated in Figs. 4 and 5, in the bottom plate 51 of the second frame 5, a notch 511 is formed at a location corresponding to a lower side of the block-shaped mechanism body 3. Thus, the block-shaped mechanism body 3 is disposed so as not to contact the bottom plate 51. Even when each Roberval mechanism 33 of the block-shaped mechanism body 3 bends due to a load acting on the weighing pan 2, the block-shaped mechanism body 3 does not contact the bottom plate 51.

The block-shaped mechanism body 3 is mounted such that the fixed column 32 is spaced apart from the back plate 53 of the second frame 5. Thus, a space is formed between the fixed column 32 of the block-shaped mechanism body 3 and the back plate 53, and the electromagnetic force generating device 6 is disposed in the space. The electromagnetic force generating device 6 is attached to the bottom plate 51 of the second frame 5 such that the electromagnetic force generating device 6 is disposed adjacent to the block-shaped mechanism body 3 on a rear side (opposite to a movable column 31 side) with respect to the fixed column 32.

As illustrated in Fig. 5, the electromagnetic force generating device 6 includes a movable coil 61 and a magnetic circuit 62. The magnetic circuit 62 has a configuration including a permanent magnet, a yoke, and the like, and can form a static magnetic field inside. The movable coil 61 is disposed in the static magnetic field formed by the magnetic circuit 62. Therefore, a magnetic force generated by the magnetic circuit 62 acts on the movable coil 61, and the movable coil 61 is held such that the movable coil 61 can be displaced along the vertical direction, which is an axial direction of the movable coil 61.

As described above, the one end portion of each lever extension member 7 in the longitudinal direction D1 is fixed to the lever 34 of the block-shaped mechanism body 3. The other end portion of each lever extension member 7 is fixed to the movable coil 61 of the electromagnetic force generating device 6. Therefore, when the movable column 31 is displaced in the vertical direction due to a load acting on the weighing pan 2 and the lever 34 rocks about the fulcrum spring 353, the movable coil 61 fixed to the lever 34 via each lever extension member 7 is displaced in the vertical direction.

The detector 8 is configured to detect displacement of the lever 34, and includes, for example, a light-emitting element and a light-receiving element mounted on a circuit board 81. In the present embodiment, the shutter 9 is connected to the lever extension member 7 attached to the lever 34. Therefore, part of light incident on the light-receiving element from the light-emitting element can be blocked by the shutter 9. Thus, an amount of light shielded by the shutter 9 changes depending on displacement of the lever 34. Displacement of the lever 34 can be detected by detecting the change in the amount of light with the light-receiving element.

Upon measurement of mass of an object to be measured, the detector 8 detects displacement of the lever 34, and a current fed to the movable coil 61 is feedback-controlled so that the lever 34 is not displaced. In this case, the larger the mass of the object to be measured is, the greater a value of a current fed to the movable coil 61 is. Therefore, the mass of the object to be measured can be measured based on the value of the current fed to the movable coil 61.

### 2. Configuration of First Stopper

In the present embodiment, a first stopper 11 is provided which restricts displacement of the lever 34 in the horizontal direction. A protrusion 342 is formed on the lever 34, for example, by embedding a pin to the lever 34. However, the protrusion 342 is not limited to a separate member such as a pin, and may be configured integrally with the lever 34, for example.

The protrusion 342 is formed so as to protrude in the vertical direction at an end portion of the lever 34 on a side opposite to a point-of-force spring 352 side with respect to the fulcrum spring 353. The first stopper 11 contacts the protrusion 342 of the lever 34, and thus restricts displacement of the lever 34 in the horizontal direction.

More specifically, the first stopper 11 is configured such that a stopper portion 111 extending in the horizontal direction, a connecting portion 112 extending upward from one end of the stopper portion 111, and a grip 113 connected to an upper end of the connecting portion 112 are integrally formed. The first stopper 11 is fixed to the extended portion 321 of the fixed column 32 at the stopper portion 111 by means of a fixture such as a screw.

An insertion hole 114 is formed at an end portion of the stopper portion 111 opposite to the end portion closer to the connecting portion 112 (a front end portion closer to the lever 34). The protrusion 342 of the lever 34 is inserted into the insertion hole 114. The insertion hole 114 is formed with an inner diameter slightly larger than an outer diameter of the protrusion 342. Thus, the insertion hole 114 allows the protrusion 342 to be displaced in the vertical direction within the insertion hole 114. In contrast, the insertion hole 114 restricts displacement of the protrusion 342 in the horizontal direction.

An opening 333 into which the first stopper 11 is inserted is formed in the upper beam 331 (beam closer to the lever 34) constituting the Roberval mechanism 33. When the first stopper 11 is fixed to the fixed column 32, an operator grips the grip 113 of the first stopper 11, and inserts the first stopper 11 into the opening 333 in such a manner that the stopper portion 111 is inserted first. Then, the stopper portion 111 is fixed to the extended portion 321 of the fixed column 32 in a state where the stopper portion 111 is brought into contact with the upper surface of the extended portion 321 and the protrusion 342 of the lever 34 is inserted into the insertion hole 114. In this state, the connecting portion 112 is inserted into the opening 333, and the grip 113 is located above the Roberval mechanism 33 (above the block-shaped mechanism body 3).

According to the first stopper 11 as described above, by bringing the protrusion 342 into contact with the stopper portion 111 of the first stopper 11 on a lateral side of the lever 34 in the horizontal direction, displacement of the lever 34 in the horizontal direction can be restricted. At that time, the insertion hole 114 of the stopper portion 111 into which the protrusion 342 is inserted functions as a contact portion which contacts the protrusion 342. The first stopper 11 restricts displacement of the lever 34 in the horizontal direction in the insertion hole 114 located at a height near a center of gravity of the lever 34 (height of approximately a center of the lever 34).

### 3. Configuration of Second Stopper

In the present embodiment, in addition to the first stopper 11 as described above, a second stopper 12 is provided which restricts displacement of the lever extension member 7 in the horizontal direction. The lever extension members 7 are connected to each other by a connecting member 71 at end portions of the lever extension members 7 opposite to the end portions closer to the lever 34. The connecting member 71 is a plate-like member extending in the horizontal direction, and the second stopper 12 is disposed above the connecting member 71 such that the second stopper 12 faces the connecting member 71.

A protrusion 72 is formed on the connecting member 71, for example, by embedding a pin to the connecting member 71. However, the protrusion 72 is not limited to a separate member such as a pin, and may be configured integrally with the connecting member 71, for example. The protrusion 72 is formed so as to protrude in the vertical direction. The second stopper 12 contacts the protrusion 72, and thus restricts displacement of the connecting member 71 in the horizontal direction. Thus, displacement of each lever extension member 7 in the horizontal direction is restricted.

The second stopper 12 is a plate-like member extending in the horizontal direction, and formed with an insertion hole 121 at a location facing the protrusion 72. The protrusion 72 is inserted into the insertion hole 121. The insertion hole 121 is formed with an inner diameter slightly larger than an outer diameter of the protrusion 72. Thus, the insertion hole 121 allows the protrusion 72 to be displaced in the vertical direction within the insertion hole 121. In contrast, the insertion hole 121 restricts displacement of the protrusion 72 in the horizontal direction.

### 4. Operation and Effect

(1) In the present embodiment, the first stopper 11 restricts horizontal displacement of the lever 34 rocking about the fulcrum spring 353 constituting the elastic fulcrum. As described, since the first stopper 11 can directly restrict displacement of the lever 34 in the horizontal direction, which is different from a rocking direction (vertical direction), deformation of the fulcrum spring 353 can be effectively prevented.
(2) In addition, in the present embodiment, not only can horizontal displacement of the lever 34 be restricted but also horizontal displacement of the lever extension member 7 having one end portion fixed to the lever 34 can be restricted by the second stopper 12. In a case where the second stopper 12 restricts horizontal displacement of the lever extension member 7, displacement of a portion of the lever extension member 7 having a greater displacement amount, the portion being closer to the movable coil 61, can be restricted; however, a moment may act on the lever extension member 7 with the second stopper 12 as a fulcrum and may deform the fulcrum spring 353 via the lever 34. Even in such a case, in the present embodiment, since the first stopper 11 restricts displacement of the lever 34, deformation of the fulcrum spring 353 can be more effectively prevented.
(3) In particular, in the present embodiment, at a height close to the center of gravity of the lever 34, the first stopper 11 can restrict displacement of the lever 34 in the horizontal direction. Therefore, since it possible to prevent a moment in the vertical direction from acting on the lever 34 whose displacement is restricted by the first stopper 11, the moment acting with the first stopper 11 as a fulcrum, deformation of the fulcrum spring 353 can be more effectively prevented.
(4) In addition, in the present embodiment, since the first stopper 11 fixed to the extended portion 321 of the fixed column 32 restricts displacement of the lever 34 in the horizontal direction, relative displacement of the lever 34 with respect to the fixed column 32 can be restricted. Since the fixed column 32 is a member fixed to the frames (the first frame 4 and the second frame 5) and a backlash of the fixed column 32 is small, it is possible to effectively restrict displacement of the lever 34 in the horizontal direction by fixing the first stopper 11 to the fixed column 32.
(5) Furthermore, in the present embodiment, by inserting the first stopper 11 into the opening 333 formed in the beam 331 of the Roberval mechanism 33, the stopper portion 111 of the first stopper 11 can be disposed between the beam 331 of the Roberval mechanism 33 and the extended portion 321 of the fixed column 32. Therefore, it is possible to fix the first stopper 11 to the fixed column 32 while maintaining a function of the Roberval mechanism 33.
(6) In addition, in the present embodiment, since it is possible to insert the first stopper 11 into the opening 333 and fix the first stopper 11 to the fixed column 32 while gripping the grip 113, attachment work of the first stopper 11 is facilitated.

### 5. Modification

In the above embodiment, the configuration has been described where the block-shaped mechanism body 3 is formed by hollowing out one base material, and therefore the movable column 31, the fixed column 32, the Roberval mechanisms 33, the lever 34, the connecting portion 35, and the like are integrally formed. However, the present invention is not limited to the above configuration. The movable column 31, the fixed column 32, the Roberval mechanisms 33, the lever 34, the connecting portion 35, and the like may be prepared as separate members, and the electronic balance may be configured by combining the above members.

The shape of the first stopper 11 is not limited to the above-described shape as long as the first stopper 11 can restrict displacement of the lever 34 in the horizontal direction. The configuration of the first stopper 11 is not limited to the configuration where the protrusion 342 is inserted into the insertion hole 114. Similarly, the shape of the second stopper 12 is not limited to the above-described shape as long as the second stopper 12 can restrict displacement of the lever extension member 7 in the horizontal direction. The configuration of the second stopper 12 is not limited to the configuration where the protrusion 72 is inserted into the insertion hole 121.

### DESCRIPTION OF REFERENCE NUMERALS

- 1: Base member
- 2: Weighing pan
- 3: Block-shaped mechanism body
- 4: First frame
- 5: Second frame
- 6: Electromagnetic force generating device
- 7: Lever extension member
- 8: Detector
- 9: Shutter
- 11: First stopper
- 12: Second stopper
- 31: Movable column
- 32: Fixed column
- 33: Roberval mechanism
- 34: Lever
- 61: Movable coil
- 62: Magnetic circuit
- 72: Protrusion
- 111: Stopper portion
- 112: Connecting portion
- 113: Grip
- 114: Insertion hole
- 121: Insertion hole
- 321: Extended portion
- 331: Beam
- 333: Opening
- 342: Protrusion

## Claims

1. An electronic balance comprising:
a frame (4);
a fixed column (32) which is fixed to the frame;
a weighing pan (2) on which an object to be measured is placed;
a movable column (31) to which the weighing pan is attached and can be displaced together with the weighing pan;
a Roberval mechanism (33) which interconnects the fixed column and the movable column and restricts movement of the movable column such that the movable column is displaced in a vertical direction;
a lever (34) which rocks about an elastic fulcrum in conjunction with displacement of the movable column in the vertical direction;
a lever extension member (7) which includes one end portion fixed to the lever;
a movable coil (61) which is fixed to another end portion of the lever extension member and is displaced in conjunction with rocking of the lever;
a magnetic circuit (62) which applies a magnetic force to the movable coil;
a first stopper (11) which restricts displacement of the lever in a horizontal direction;
a second stopper (12) which restricts displacement of the lever extension member in the horizontal direction.

2. The electronic balance according to claim 1, wherein the first stopper (11) restricts displacement of the lever in the horizontal direction at a contact portion of the first stopper which is located at a height near a center of gravity of the lever.

3. The electronic balance according to claim 1 or 2, wherein the first stopper (11) is fixed to the fixed column.

4. The electronic balance according to claim 3, wherein the Roberval mechanism (33) is formed with an opening (333) into which the first stopper is inserted.

5. The electronic balance according to claim 4, wherein the first stopper (11) is formed with a grip (113) which is gripped when the first stopper is inserted into the opening and is fixed to the fixed column.

## Patentansprüche

1. Elektronische Waage, umfassend:
einen Rahmen (4);
eine feste Säule (32), die am Rahmen befestigt ist;
eine Waagschale (2), auf der ein zu messendes Objekt platziert wird;
eine bewegbare Säule (31), an der die Waagschale angebracht ist und die zusammen mit der Waagschale verschoben werden kann;
einen Roberval-Mechanismus (33), der die feste Säule und die bewegbare Säule miteinander verbindet und eine Bewegung der bewegbaren Säule so einschränkt, dass die bewegbare Säule in vertikaler Richtung verschoben wird;
einen Hebel (34), der in Verbindung mit der Verschiebung der bewegbaren Säule in vertikaler Richtung um einen elastischen Drehpunkt schwenkt;
ein Hebelverlängerungselement (7), das einen am Hebel befestigten Endabschnitt umfasst;
eine bewegbare Spule (61), die an einem anderen Endabschnitt des Hebelverlängerungselements befestigt ist und in Verbindung mit dem Schwenken des Hebels verschoben wird;
einen magnetischen Kreis (62), der eine Magnetkraft auf die bewegbare Spule ausübt;
ein erstes Anschlagelement (11), das die Verschiebung des Hebels in horizontaler Richtung einschränkt;
ein zweites Anschlagelement (12), das die Verschiebung des Hebelverlängerungselements in horizontaler Richtung einschränkt.

2. Elektronische Waage nach Anspruch 1, wobei das erste Anschlagelement (11) die Verschiebung des Hebels in horizontaler Richtung an einem Kontaktabschnitt des ersten Anschlagselements einschränkt, der auf einer Höhe nahe dem Schwerpunkt des Hebels angeordnet ist.

3. Elektronische Waage nach Anspruch 1 oder 2, wobei das erste Anschlagelement (11) an der festen Säule befestigt ist.

4. Elektronische Waage nach Anspruch 3, wobei der Roberval-Mechanismus (33) mit einer Öffnung (333) ausgebildet ist, in die das erste Anschlagelement eingeführt ist.

5. Elektronische Waage nach Anspruch 4, wobei das erste Anschlagelement (11) mit einem Griff (113) ausgebildet ist, der ergriffen wird, wenn das erste Anschlagelement in die Öffnung eingeführt und an der festen Säule befestigt wird.

## Revendications

1. Balance électronique comprenant :
un bâti (4) ;
une colonne fixe (32) qui est fixée au bâti ;
un plateau de pesage (2) sur lequel un objet à mesurer est placé ;
une colonne mobile (31) sur laquelle le plateau de pesage est fixé et peut être déplacée conjointement avec le plateau de pesage ;
un mécanisme Roberval (33) qui interconnecte la colonne fixe et la colonne mobile et limite le mouvement de la colonne mobile de sorte que le colonne mobile est déplacée dans une direction verticale ;
un levier (34) qui oscille autour d'un pivot élastique conjointement avec le déplacement de la colonne mobile dans la direction verticale ;
un élément d'extension de levier (7) qui comprend une partie d'extrémité fixée sur le levier ;
une bobine mobile (61) qui est fixée sur une autre partie d'extrémité de l'élément d'extension de levier et est déplacée conjointement avec le balancement du levier ;
un circuit magnétique (62) qui applique une force magnétique sur la bobine mobile ;
une première butée (11) qui limite le déplacement du levier dans une direction horizontale ;
une seconde butée (12) qui limite le déplacement de l'élément d'extension de levier dans la direction horizontale.

2. Balance électronique selon la revendication 1, dans laquelle la première butée (11) limite le déplacement du levier dans la direction horizontale au niveau d'une partie de contact de la première butée qui est positionnée à une hauteur à proximité d'un centre de gravité du levier.

3. Balance électronique selon la revendication 1 ou 2, dans laquelle la première butée (11) est fixée à la colonne fixe.

4. Balance électronique selon la revendication 3, dans laquelle le mécanisme Roberval (33) est formé avec une ouverture (333) dans laquelle la première butée est insérée.

5. Balance électronique selon la revendication 4, dans laquelle la première butée (11) est formée avec un élément de préhension (113) qui est saisi lorsque la première butée est insérée dans l'ouverture et est fixée sur la colonne fixe.
